# EUROPEAN PATENT APPLICATION

(11) **EP 4 361 719 A1**
(43) Date of publication of application: **01.05.2024**
(21) Application number: 22848529.8
(22) Date of filing: 26.07.2022
(51) Int. Cl.: G02F 1/225

(54) **ELECTRO-OPTIC MODULATOR AND ELECTRO-OPTIC DEVICE**

(30) Priority: 30.07.2021 CN 202110870918
(71) Applicant: Nanjing Lycore Technologies Co., Ltd., Nanjing, Jiangsu 210000 (CN)
(72) Inventor: LIANG, Hanxiao, Nanjing, Jiangsu 210000 (CN); SONG, Yipin, Nanjing, Jiangsu 210000 (CN); ZHOU, Yingcong, Nanjing, Jiangsu 210000 (CN); WU, Haicang, Nanjing, Jiangsu 210000 (CN); MAO, Wenhao, Nanjing, Jiangsu 210000 (CN); SONG, Shiwei, Nanjing, Jiangsu 210000 (CN); SUN, Weiqi, Nanjing, Jiangsu 210000 (CN); YU, Qingyang, Nanjing, Jiangsu 210000 (CN)
(74) Representative: Nevett, Duncan
(86) International application number: PCT/CN2022/107914
(87) International publication number: WO 2023/005924

(57) **Abstract**

An electro-optic modulator includes: an optical splitter (110); a first optical waveguide (120a) and a second optical waveguide (120b); traveling wave electrodes (130) including a first grounding electrode (131), a first signal electrode (132), a second signal electrode (133), and a second grounding electrode (134); extension electrodes (140) including at least one first signal sub-electrode (142a, 142b) and two second signal sub-electrodes (143a, 143b), where the two second signal sub-electrodes (143a, 143b) are arranged on both sides of the at least one first signal sub-electrode (142a, 142b), the first optical waveguide (120a) is arranged between one second signal sub-electrode (143a or 143b) of the two second signal sub-electrodes and a first signal sub-electrode (142a or 142b) adjacent to the one second signal sub-electrode, and the second optical waveguide (120b) is arranged between the other second signal sub-electrode (143a or 143b) of the two second signal sub-electrodes and a first signal sub-electrode (142a or 142b) adjacent to the other second signal sub-electrode, and the first signal electrode (132) is electrically connected to the first signal sub-electrodes (142a, 142b), and the second signal electrode (133) is electrically connected to the second signal sub-electrodes (143a, 143b). There is further provided an electro-optic device including the electro-optic modulator.

## Description

### CROSS-REFERENCE TO RELATED APPLICATION

The present disclosure claims priority to Chinese Patent Application No. 202110870918.1, filed on July 30, 2021, which is incorporated herein by reference in its entirety.

### TECHNICAL FIELD

The present disclosure relates to electro-optic technologies, and in particular, to an electro-optic modulator and an electro-optic device.

### BACKGROUND

Electro-optic modulators are modulators made by using the electro-optic effect of some electro-optic crystals, such as lithium niobate (LiNbO₃) crystals, gallium arsenide (GaAs) crystals, or lithium tantalate (LiTaO₃) crystals. When a voltage is applied to electro-optic crystals, a refractive index of the electro-optic crystals will change, thereby implementing modulation of the phase, amplitude, intensity, polarization state, and other characteristics of an optical signal. A common modulator among electro-optic modulators is the Mach-Zehnder modulator. This interferometer-type modulator mainly uses a phase difference between two arms in the modulator to complete signal modulation of coherence enhancement and coherence cancellation.

However, with the increasing and urgent demands for high-speed, large-capacity, and integrated communication technologies, it is desired to minimize the size of integrated devices while ensuring the modulation effect of electro-optic modulators. This places high requirements on electrode design.

### SUMMARY

It will be advantageous to provide a mechanism to alleviate, mitigate or even eliminate one or more of the above-mentioned problems.

According to an aspect of the present disclosure, there is provided an electro-optic modulator, including: an optical splitter configured to split an optical input signal into a first optical signal and a second optical signal; a first optical waveguide and a second optical waveguide configured to provide optical transmission paths for the first optical signal and the second optical signal, respectively; traveling wave electrodes extending along a first direction and configured to transmit a radio frequency signal, where the traveling wave electrodes include a first grounding electrode, a first signal electrode, a second signal electrode, and a second grounding electrode that are arranged in sequence in a second direction, and the second direction intersects the first direction; and extension electrodes arranged along the optical transmission paths in a gap between the first signal electrode and the second signal electrode and configured to modulate the first optical signal and the second optical signal based on the radio frequency signal. The extension electrodes include at least one first signal sub-electrode and two second signal sub-electrodes, which are arranged side by side in the second direction and each have a length direction parallel to the first direction, wherein the two second signal sub-electrodes are arranged on both sides of the at least one first signal sub-electrode. The first optical waveguide is arranged between one second signal sub-electrode of the two second signal sub-electrodes and a first signal sub-electrode adjacent to the one second signal sub-electrode, and the second optical waveguide is arranged between the other second signal sub-electrode of the two second signal sub-electrodes and a first signal sub-electrode adjacent to a sub-electrode of the other second signal electrode.

According to another aspect of the present disclosure, there is provided an electro-optic device, including the electro-optic modulator mentioned above.

These and other aspects of the present disclosure will be clear from the embodiments described below, and will be clarified with reference to the embodiments described below.

### BRIEF DESCRIPTION OF THE DRAWINGS

More details, features, and advantages of the present disclosure are disclosed in the following description of exemplary embodiments with reference to the accompany drawings, in which:
FIG. 1 is a schematic top view of an electro-optic modulator according to an exemplary embodiment;
FIG. 2 is a schematic top view of an electro-optic modulator according to an exemplary embodiment;
FIG. 3 is a schematic perspective view of an electro-optic modulator according to an exemplary embodiment;
FIG. 4 is a schematic perspective view of an electro-optic modulator according to an exemplary embodiment;
FIG. 5 is a schematic perspective view of an electro-optic modulator according to an exemplary embodiment;
FIG. 6 is a schematic perspective view of an electro-optic modulator according to an exemplary embodiment;
FIG. 7 is a schematic perspective view of an electro-optic modulator according to an exemplary embodiment;
FIG. 8 is a schematic perspective view of an electro-optic modulator according to an exemplary embodiment; and
FIG. 9 is a schematic block diagram of an electro-optic device according to an exemplary embodiment.

### DETAILED DESCRIPTION OF EMBODIMENTS

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

Technologies related to electro-optic modulation have been widely developed and applied, such as optical communications, microwave photonics, laser-beam deflection, wavefront modulation, etc. In a Mach-Zehnder modulator in the related art, one signal electrode and two grounding electrodes are used to input signals in the form of 0 (grounding signal), 1 (modulating voltage signal), 0 (grounding signal), thereby generating two electric fields with opposite directions. The opposite electric field directions are used to implement opposite modulation of two optical path signals located in the two electric fields, thereby generating a phase difference and completing coherence enhancement or coherence cancellation.

However, to achieve a sufficient phase difference, a relatively large modulation voltage and a relatively long transmission distance are required. An existing electro-optic modulator has the disadvantages of large size or low modulation efficiency, making it difficult to meet the requirements of integration and high efficiency currently on the market.

Embodiments of the present disclosure provide an improved electro-optic modulator that may alleviate, mitigate, or even eliminate the above-mentioned disadvantages.

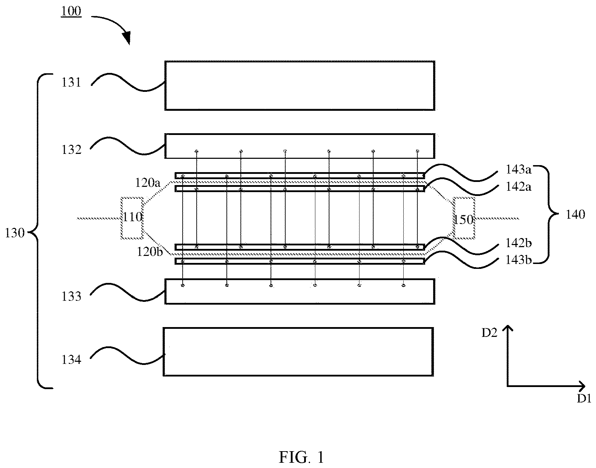

FIG. 1 is a schematic top view of an electro-optic modulator 100 according to an exemplary embodiment. Referring to FIG. 1, the electro-optic modulator 100 may include an optical splitter 110, a first optical waveguide 120a, a second optical waveguide 120b, traveling wave electrodes 130, and extension electrodes 140.

The traveling wave electrodes 130 extend along a first direction D1, and may include a first grounding electrode 131, a first signal electrode 132, a second signal electrode 133, and a second grounding electrode 134 that are arranged in sequence in a second direction D2. The traveling wave electrodes 130 extending along the first direction D1 refers to that a length direction of the traveling wave electrodes 130 extends along the first direction D1. The extension electrodes 140 are arranged along an optical transmission path, and may include at least one first signal sub-electrode (two first signal sub-electrodes 142a and 142b in the embodiment illustrated in FIG. 1) of the first signal electrode 132 and two second signal sub-electrodes 143a and 143b of the second signal electrode 133 that are arranged side by side in the second direction D2, and each sub-electrode has a length direction parallel to the first direction D1. The two second signal sub-electrodes 143a and 143b are arranged on both sides of the at least one first signal sub-electrode. As shown in FIG. 1, the two first signal sub-electrodes 142a and 142b are provided, and the two first signal sub-electrodes 142a and 142b are both located between the two second signal sub-electrodes 143a and 143b. The first optical waveguide 120a is arranged between one second signal sub-electrode 143a and the first signal sub-electrode 142a adjacent to the second signal sub-electrode 143a, and the second optical waveguide 120b is arranged between the other second signal sub-electrode 143b and the first signal sub-electrode 142b adjacent to the second signal sub-electrode 143b. The second direction D2 intersects the first direction D1. In the embodiment illustrated in FIG. 1, the second direction D2 is substantially perpendicular to the first direction D 1.

In other embodiments, only one first signal sub-electrode (not shown) may be provided, and the two second signal sub-electrodes 143a and 143b are arranged on both sides of the only one first signal sub-electrode. The first optical waveguide 120a is arranged between the only one first signal sub-electrode and one second signal sub-electrode 143a of the second signal electrode 133, and the second optical waveguide 120b is arranged between the only one first signal sub-electrode 142b and the other second signal sub-electrode 143b of the second signal electrode 133.

In some embodiments, as shown in FIG. 1, after passing through the optical splitter 110, an optical input signal is divided into a first optical signal and a second optical signal, which are transmitted along optical transmission paths provided by the first optical waveguide 120a and the second optical waveguide 120b, respectively. A voltage is applied to each of the first signal electrode 132 and the second signal electrode 133, and the first grounding electrode 131 and the second grounding electrode 134 are grounded. The first signal electrode 132 is electrically connected to the first signal sub-electrodes 142a and 142b, and the second signal electrode 133 is electrically connected to the second signal sub-electrodes 143a and 143b, such that each sub-electrode has a potential equal to that of a traveling wave electrode electrically connected thereto. When the first optical signal and the second optical signal pass through a gap between the extension electrodes 140, a potential difference between the sub-electrodes may be used to modulate the optical signals.

In an electro-optic modulator in the related art, electrodes on both sides of an optical waveguide are usually arranged in a manner that the electrode on one side is grounded and has a potential of 0, while the electrode on the other side is applied a voltage U. In this case, a potential difference between the two electrodes is U or -U, which may be used to modulate the two optical signals with potential differences opposite in polarity. However, in this embodiment of the present disclosure, the sub-electrodes are disposed on both sides of each optical waveguide, and an electrical connection structure of the sub-electrodes is adjusted, such that the sub-electrodes on both sides of each optical waveguide have opposite potentials, such as -U and U. In this case, a potential difference between the sub-electrodes on both sides of each optical waveguide is 2U or -2U. A larger potential difference causes a refractive index of an electro-optic crystal to change more drastically, and light wave characteristic changes of the electro-optic crystal also change more drastically, so an ideal phase difference, such as Π, can be quickly reached. To achieve the same phase difference as in the prior art, this embodiment of the present disclosure only requires a shorter optical signal propagation distance under the same conditions, thereby greatly reducing a device size and significantly saving space.

Continuing to refer to FIG. 1, positions of the electrical connections cause each of the first signal sub-electrodes 142a and 142b and the second signal sub-electrodes 143a and 143b to be divided into one or more sections in the first direction D1.

Appropriately reducing a length of a corresponding sub-electrode or dividing the corresponding sub-electrode into a plurality of sections according to a requirement, which may minimize a transmission loss of an electrical signal, while minimizing an impact on a transmission speed of the electrical signal, and ensuring that the transmission speed of the electrical signal is the same as or close to a transmission group velocity of the optical signal in the waveguide.

Continuing to refer to FIG. 1, in some embodiments, the electro-optic modulator 100 may further include an optical combiner 150. The modulated first optical signal and second optical signal are combined into an optical combined signal after passing through the optical combiner 150. The optical combined signal may be directly outputted as an optical output signal, or may be divided into two or more optical output signals and then outputted.

In some embodiments, the electro-optic modulator 100 further includes a protective layer configured to cover at least one component. For example, the traveling wave electrodes 130 or the extension electrodes 140 are covered with the protective layer, which may slow down natural oxidation or accidental surface damage of the electrodes, and prolong the service life of the element.

In some embodiments, the first optical waveguide 120a and the second optical waveguide 120b are lithium niobate optical waveguides. Lithium niobate crystals have a smooth surface and are an optical material with excellent electro-optic and acousto-optic effects. High-quality optical waveguides prepared using lithium niobate crystals can support an ultra-low transmission loss, and have many excellent characteristics such as mature technology, low cost, and mass production.

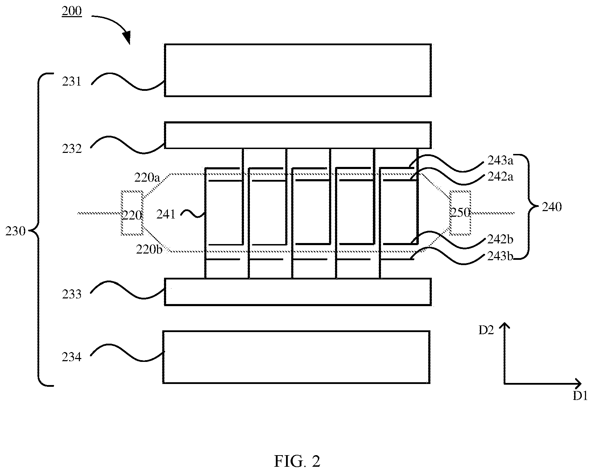

FIG. 2 is a schematic top view of an electro-optic modulator 200 according to an exemplary embodiment. Referring to FIG. 2, the electro-optic modulator 200 may include an optical splitter 210, a first optical waveguide 220a, a second optical waveguide 220b, traveling wave electrodes 230, extension electrodes 240, and an optical combiner 250.

The traveling wave electrodes 230 may include a first grounding electrode 231, a first signal electrode 232, a second signal electrode 233, and a second grounding electrode 234 that are arranged in sequence in a second direction D2. The extension electrodes 240 are arranged along an optical transmission path, and include at least one first signal sub-electrode 242a and 242b and two second signal sub-electrodes 243a and 243b that are arranged side by side in the second direction D2. The two second signal sub-electrodes 243a and 243b are arranged on both sides of the at least one first signal sub-electrode 242a and 242b. The first optical waveguide 220a and the second optical waveguide 220b are each arranged to extend in a gap between one first signal sub-electrode and a second signal sub-electrode adjacent to the first signal sub-electrode. Reference numerals similar to those in FIG. 1 indicate similar elements, and therefore detailed description thereof is omitted for the sake of brevity.

A difference between the electro-optic modulator 200 shown in FIG. 2 and the electro-optic modulator 100 shown in FIG. 1 lies in that first extension arms and second extension arms 241 are provided between the traveling wave electrodes 230 and the extension electrodes 240. The first extension arms are configured to electrically connect the first signal electrode 232 to the first signal sub-electrodes 242a and 242b. The second extension arms are configured to electrically connect the second signal electrode 233 to the second signal sub-electrodes 243a and 243b. In some embodiments, the first extension arms may be integrally formed with the first signal electrode 232 and the first signal sub-electrodes 242a and 242b, and the second extension arms may be integrally formed with the second signal electrode 233 and the second signal sub-electrodes 243a and 243b.

The arrangement mentioned above may stabilize the electrical connection between each signal electrode and a sub-electrode thereof, pattern the device, and facilitate packaging integration.

Continuing to refer to FIG. 2, the extension arms 241 cause each of the first signal sub-electrodes 242a and 242b and the second signal sub-electrodes 243a and 243b to be divided into one or more sections in the first direction D1. A length of a sub-electrode is reduced appropriately according to a requirement, or the sub-electrode is divided into a plurality of sections, which may minimize a transmission loss of an electrical signal, while minimizing an impact on a transmission speed of the electrical signal, and ensuring that the transmission speed of the electrical signal is the same as or close to a transmission group velocity of the optical signal in the waveguide.

For convenience of description, the following description is given using examples in which the extension arms are used as the electrical connection method between the traveling wave electrodes and the extension electrodes. Certainly, an electrical connection method between the traveling wave electrodes and the extension electrodes is not limited to this, and other methods may alternatively be used, as long as the electrical signal can be transmitted from the traveling wave electrodes to the extension electrodes.

A connection shape between the extension arms and the sub-electrodes may be T-shaped or L-shaped. Certainly, it is not limited to the shape shown in this embodiment of the present disclosure. Other shapes may alternatively be adopted according to actual requirements to match an appropriate speed.

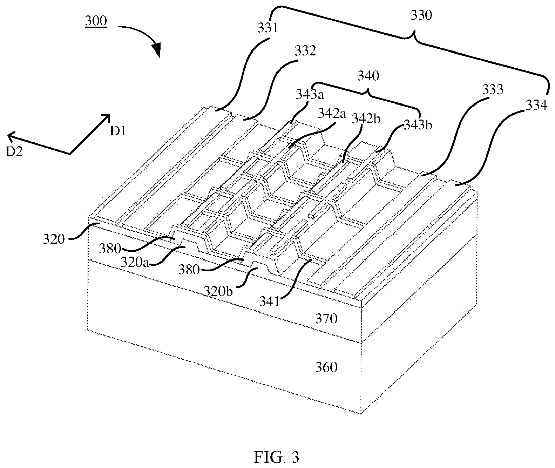

FIG. 3 is a schematic perspective view of an electro-optic modulator 300 according to an exemplary embodiment. The electro-optic modulator 300 may include a first optical waveguide 320a, a second optical waveguide 320b, traveling wave electrodes 330, extension electrodes 340, and extension arms 341.

As shown in FIG. 3, the traveling wave electrodes 330 may include a first grounding electrode 331, a first signal electrode 332, a second signal electrode 333, and a second grounding electrode 334 that are arranged in sequence in the second direction D2. The extension electrodes 340 are arranged along an optical transmission path, and include two first signal sub-electrodes 342a and 342b and two second signal sub-electrodes 343a and 343b that are arranged side by side in the second direction D2. The two second signal sub-electrodes 343a and 343b are arranged on both sides of all the first signal sub-electrodes 342a and 342b. The first optical waveguide 320a is arranged to extend in a gap between one first signal sub-electrode 342a and an adjacent second signal sub-electrode 343a, and the second optical waveguide 320b is arranged to extend in a gap between the other first signal sub-electrode 342b and an adjacent second signal sub-electrode 343a. Reference numerals similar to those in FIG. 2 indicate similar elements, and therefore detailed description thereof is omitted for the sake of brevity.

The electro-optic modulator 300 may further include a substrate 360, an isolating layer 370 on the substrate 360, a thin film layer 320 configured to form the first optical waveguide 320a and the second optical waveguide 320b, and a covering layer 380 on the first optical waveguide 320a and the second optical waveguide 320b.

Continuing to refer to FIG. 3, in some embodiments, the traveling wave electrodes 330 may be located on the thin film layer 320, and the extension electrodes 340 may be located on the covering layer 380. In this structure, a distance between sub-electrodes on both sides of a same optical waveguide is smaller, and an electric field intensity obtained under the same conditions is greater, which may enhance the electro-optic conversion efficiency.

In some embodiments, the traveling wave electrodes 330 and the extension electrodes 340 may be located in the isolating layer 370.

In some embodiments, the traveling wave electrodes 330 and the extension electrodes 340 may be located on the isolating layer 370.

In some embodiments, at least some of the traveling wave electrodes 330 and at least some of the extension electrodes 340 may be located in the thin film layer 320.

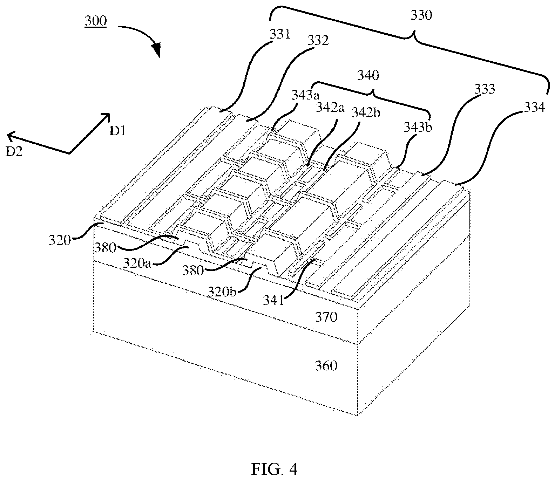

In some embodiments, as shown in FIG. 4, the traveling wave electrodes 330 and the extension electrodes 340 may be located on the thin film layer 320.

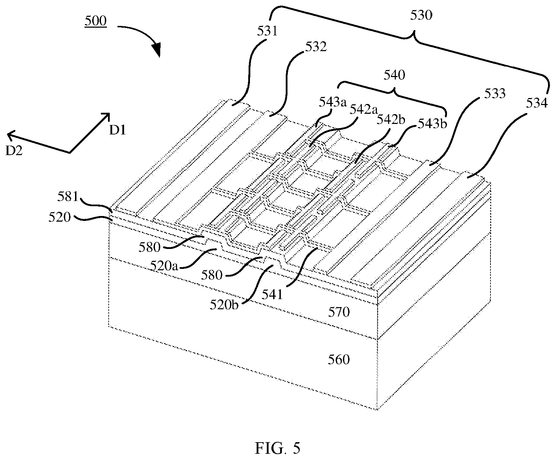

FIG. 5 is a schematic perspective view of an electro-optic modulator 500 according to an exemplary embodiment. The electro-optic modulator 500 may include a first optical waveguide 520a, a second optical waveguide 520b, traveling wave electrodes 530, extension electrodes 540, extension arms 541, a substrate 560, an isolating layer 570, a thin film layer 520, and a covering layer 580.

As shown in FIG. 5, the traveling wave electrodes 530 may include a first grounding electrode 531, a first signal electrode 532, a second signal electrode 533, and a second grounding electrode 534 that are arranged in sequence in the second direction D2. The extension electrodes 540 are arranged along an optical transmission path, and include two first signal sub-electrodes 542a and 542b and two second signal sub-electrodes 543a and 543b that are arranged side by side in the second direction D2. The two second signal sub-electrodes 543a and 543b are arranged on both sides of all the first signal sub-electrodes 542a and 542b. The first optical waveguide 520a is arranged to extend in a gap between one first signal sub-electrode 542a and an adjacent second signal sub-electrode 543a, and the second optical waveguide 520b is arranged to extend in a gap between the other first signal sub-electrode 542b and an adjacent second signal sub-electrode 543b. Reference numerals similar to those in FIG. 3 indicate similar elements, and therefore detailed description thereof is omitted for the sake of brevity.

A difference between the electro-optic modulator 500 shown in FIG. 5 and the electro-optic modulator 300 shown in FIG. 3 lies in that the covering layer extends to other areas on the thin film layer 520 than the first optical waveguide 520a and the second optical waveguide 520b, to form a covering layer 581 on the other areas.

Continuing to refer to FIG. 5, in some embodiments, the traveling wave electrodes 530 may be located on the covering layer 581 over the other areas, and the extension electrodes 540 may be located on the covering layer 580. In this structure, thicknesses of the covering layer 580 and the covering layer 581 over the other areas may be adjusted according to actual requirements, thereby regulating a transmission speed of the electrical signal and better implementing matching between transmission speeds of light and electricity.

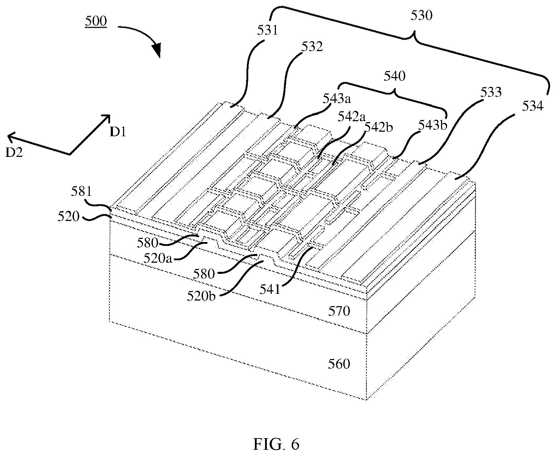

In some embodiments, as shown in FIG. 6, the traveling wave electrodes 530 and the extension electrodes 540 may be located on the covering layer 581 over the other areas.

Certainly, the positions of the traveling wave electrodes 530 and the extension electrodes 540 are not limited to the above examples, and the positions of the two may be flexibly adjusted to achieve a structure that is most conducive to the assembly and integration of the device.

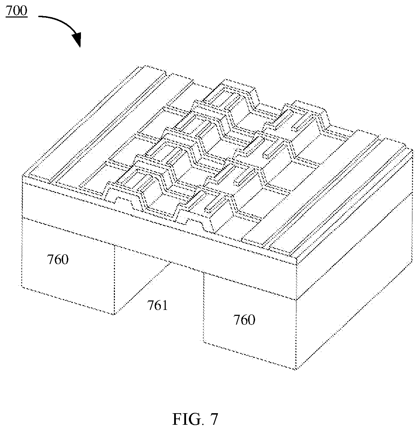

FIG. 7 is a schematic perspective view of an electro-optic modulator 700 according to an exemplary embodiment. Reference numerals similar to those in FIG. 3 indicate similar elements, and therefore detailed description thereof is omitted for the sake of brevity.

A difference between the electro-optic modulator 700 shown in FIG. 7 and the electro-optic modulator 300 shown in FIG. 3 lies in that the substrate 760 may be provided with a groove 761.

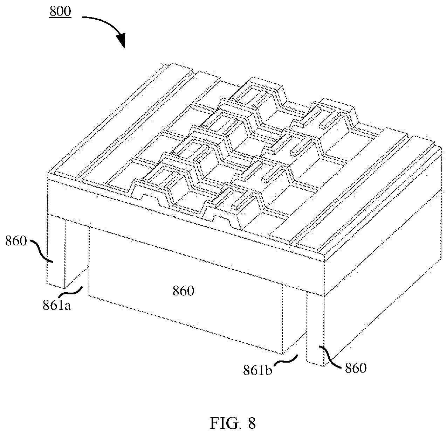

A number of grooves is not limited to 1. FIG. 8 is a schematic perspective view of an electro-optic modulator 800 according to an exemplary embodiment. Reference numerals similar to those in FIG. 3 indicate similar elements, and therefore detailed description thereof is omitted for the sake of brevity.

A difference between the electro-optic modulator 800 shown in FIG. 8 and the electro-optic modulator 300 shown in FIG. 3 lies in that the substrate 860 may be provided with two grooves 861a and 861b.

In some embodiments, the isolating layer may also be provided with a groove.

The substrate or the isolating layer may be provided with one or more grooves according to actual requirements, and parameters such as a shape, a depth, and a position of the groove may be adjusted, thereby regulating a transmission speed of the electrical signal and better implementing matching between transmission speeds of light and electricity.

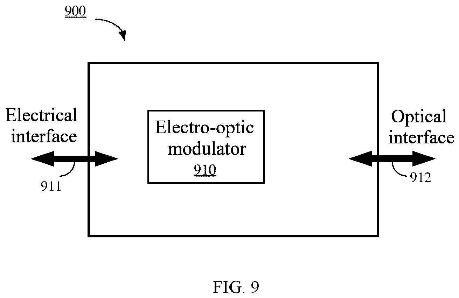

FIG. 9 is a simplified block diagram of an electro-optic device 900 according to an exemplary embodiment of the present disclosure. In an example, the electro-optic device 900 may include an electro-optic modulator 910, an electrical interface 911 coupled to the electro-optic modulator 910, and an optical interface 912 coupled to the electro-optic modulator 910. The electro-optic modulator 910 may be constructed according to any one of the embodiments described above.

Although the embodiments or examples of the present disclosure have been described with reference to the drawings, it should be understood that the methods, systems and devices described above are merely exemplary embodiments or examples, and the scope of the present disclosure is not limited by the embodiments or examples, and is only defined by the scope of the granted claims and the equivalents thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. An electro-optic modulator, comprising:
an optical splitter configured to split an optical input signal into a first optical signal and a second optical signal;
a first optical waveguide and a second optical waveguide configured to provide optical transmission paths for the first optical signal and the second optical signal, respectively;
traveling wave electrodes extending along a first direction and configured to transmit a radio frequency signal,
wherein the traveling wave electrodes comprise a first grounding electrode, a first signal electrode, a second signal electrode, and a second grounding electrode that are arranged in sequence in a second direction, and the second direction intersects the first direction; and
extension electrodes arranged along the optical transmission paths in a gap between the first signal electrode and the second signal electrode and configured to modulate the first optical signal and the second optical signal based on the radio frequency signal,
wherein the extension electrodes comprise at least one first signal sub-electrode and two second signal sub-electrodes, which are arranged side by side in the second direction and each have a length direction parallel to the first direction,
the two second signal sub-electrodes are arranged on both sides of the at least one first signal sub-electrode,
the first optical waveguide is arranged between one second signal sub-electrode of the two second signal sub-electrodes and a first signal sub-electrode adjacent to the one second signal sub-electrode, and the second optical waveguide is arranged between the other second signal sub-electrode of the two second signal sub-electrodes and a first signal sub-electrode adjacent to a sub-electrode of the other second signal electrode, and
the first signal electrode is electrically connected to the first signal sub-electrodes, and the second signal electrode is electrically connected to the second signal sub-electrodes.

2. The electro-optic modulator according to claim 1, further comprising first extension arms and second extension arms, wherein the first extension arms and the second extension arms are respectively configured to electrically connect the first signal electrode to the first signal sub-electrode and the second signal electrode to the second signal sub-electrodes.

3. The electro-optic modulator according to claim 1, wherein positions of the electrical connections cause each of the first signal sub-electrode and the second signal sub-electrodes to be divided into one or more sections in the first direction.

4. The electro-optic modulator according to claim 2, wherein the first extension arms and the second extension arms cause the first signal sub-electrode and the second signal sub-electrodes to be divided by the first extension arms and the second extension arms respectively into one or more sections in the first direction.

5. The electro-optic modulator according to claim 1, further comprising:
a substrate;
an isolating layer located on the substrate;
a thin film layer configured to form the first optical waveguide and the second optical waveguide; and
a covering layer located on the first optical waveguide and the second optical waveguide.

6. The electro-optic modulator according to claim 5, wherein the covering layer extends to other areas on the thin film layer than the first optical waveguide and the second optical waveguide.

7. The electro-optic modulator according to claim 5 or 6, wherein at least some of the traveling wave electrodes and at least some of the extension electrodes are located in the isolating layer.

8. The electro-optic modulator according to claim 5 or 6, wherein the traveling wave electrodes and the extension electrodes are located on the isolating layer.

9. The electro-optic modulator according to claim 5 or 6, wherein at least some of the traveling wave electrodes and at least some of the extension electrodes are located in the thin film layer.

10. The electro-optic modulator according to claim 5 or 6, wherein the traveling wave electrodes and the extension electrodes are located on the thin film layer.

11. The electro-optic modulator according to claim 5, wherein the traveling wave electrodes are located on the thin film layer, and
the extension electrodes are located on the covering layer.

12. The electro-optic modulator according to claim 6, wherein the traveling wave electrodes are located on the covering layer over the other areas, and
the extension electrodes are located on the covering layer over the first optical waveguide and the second optical waveguide.

13. The electro-optic modulator according to claim 6, wherein the traveling wave electrodes and the extension electrodes are located on the covering layer over the other areas.

14. The electro-optic modulator according to any one of claims 1 to 6 and 11 to 13, wherein the substrate is provided with a groove.

15. The electro-optic modulator according to any one of claims 1 to 6 and 11 to 13, wherein the isolating layer is provided with a groove.

16. The electro-optic modulator according to any one of claims 1 to 6 and 11 to 13, further comprising an optical combiner configured to combine the first optical signal and the second optical signal into an optical output signal.

17. The electro-optic modulator according to any one of claims 1 to 6 and 11 to 13, wherein the first optical waveguide and the second optical waveguide are lithium niobate optical waveguides.

18. The electro-optic modulator according to any one of claims 1 to 6 and 11 to 13, further comprising a protective layer configured to cover at least one element.

19. An electro-optic device, comprising an electro-optic modulator according to any one of claims 1 to 18.
